Europäisches Patentamt

European Patent Office

Office européen des brevets

(19)

(11) **EP 0 998 110 A2**

(12) **EUROPÄISCHE PATENTANMELDUNG**

(43) Veröffentlichungstag:
03.05.2000 Patentblatt 2000/18

(51) Int Cl.⁷: **H04M 9/08**

(21) Anmeldenummer: **99440285.7**

(22) Anmeldetag: **22.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **31.10.1998 DE 19850272**

(71) Anmelder: **ALCATEL**
**75008 Paris (FR)**

(72) Erfinder: **Walker, Michael**
**73666 Baltmannsweiler (DE)**

(74) Vertreter: **Müller, Joachim, Dipl.-Ing. et al**
**Alcatel**
**Intellectual Property Department, Stuttgart**
**Postfach 30 09 29**
**70449 Stuttgart (DE)**

(54) **Verfahren zur Verbesserung der Echounterdrückung in einem Telekommunikationssystem**

(57) Unerwünschte elektrische Kopplungen zwischen dem Sendepfad und dem Empfangspfad eines Telekommunikationssystems und akustische Kopplungen zwischen Lautsprecher und Mikrofon bei einem Teilnehmerendgerät rufen Echos hervor, die durch Echounterdrückungseinrichtungen beseitigt werden sollen. Um diese Echounterdrückungseinrichtungen an aktuelle Übertragungsfunktionen anpassen zu können, ist die Bestimmung eines Kopplungsfaktors und der Echolaufzeit erforderlich. Ein wesentliches Problem dabei ist die Unterscheidung zwischen Echo und Mischsignalen, hervorgerufen durch das sogenannte Gegensprechen. Erfindungsgemäß werden aus der Kurvenform des Sprachsignals Impulsfolgen abgeleitet, die zwar von der Frequenz nicht aber von der Amplitude des Sprachsignals abhängig sind, so daß sich bei einem realen Echo unabhängig von der Dämpfung gleiche Impulsfolgen bei dem gesendeten Signal und zeitversetzt bei einem empfangenen Echo ergeben. Die Übereinstimmung der Impulsfolgen von gesendeten und empfangenen Signal ist ein Kennzeichen dafür, daß das empfangene Signal ein Echo des gesendeten Signals ist.

Fig. 3

EP 0 998 110 A2

**Beschreibung**

Die Erfindung betrifft ein Verfahren zur Verbesserung der Echounterdrückung in einem Telekommunikationssystem, bei dem eine unerwünschte elektrische Kopplung zwischen einem Empfangspfad und einem Sendepfad auftritt und die störende Echos, sogenannte Leitungsechos, hervorruft. In Freisprecheinrichtungen und Saalbeschallungsanlagen können durch akustische Kopplung zwischen Lautsprecher und Mikrofon ebenfalls Echos, sogenannte akustische Echos, auftreten. Um erfolgreich eine Echounterdrückung durchführen zu können muß die Stärke der Kopplung von Sendepfad und Empfangspfad durch einen Kopplungsfaktor CF (Coupling Factor) bestimmt werden, der das Verhältnis der am Echoempfangsort empfangenen zu der an der Echoquelle gesendeten Signalenergie angibt. Das Echosignal $y(k)$ ist im Vergleich zum gesendeten Signal $x(k)$ um die Echolaufzeit i verzögert, somit wird der Kopplungsfaktor

$$CF = \frac{\sum\limits_{k=0}^{N}\left(y(k)\right)^2}{\sum\limits_{i=0}^{N}\left(x(k-i)\right)^2} \qquad (G1)$$

Dabei bedeuten

$x(k - i)$      Abtastwert des gesendeten Signals
$y(k)$      Abtastwert des empfangenen Signals, verzögert um die Echolaufzeit i
$N$      Anzahl der Abtastwerte des anregenden Signals
$i$      Echolaufzeit

Ein wesentliches Problem bei der Bestimmung des Kopplungsfaktor CF besteht darin, die Echolaufzeit $i$ in Gleichung (G1) möglichst genau zu bestimmen. Zur Ermittlung der Echolaufzeit $i$ muß festgestellt werden, wann das gesendete Signal am Echoempfangsort eintrifft. Da Telekommunikationssysteme im allgemeinen bidirektional betrieben werden, kann das Echosignal von einem Signal überlagert werden, das am fernen Ende des Übertragungsweges als Nutzsignal eingespeist wird. Dies trifft immer dann zu, wenn an beiden Enden des Übertragungsweges gleichzeitig gesprochen wird. Das ist die sogenannte Gegensprechsituation. Es muß nun bei der Bestimmung des Kopplungsfaktor CF sichergestellt werden, daß die Echolaufzeit $i$ korrekt eingestellt ist und daß kein Gegensprechen (double talk) auftritt. Es ist ein allgemeines Problem, bei allen möglichen Übertragungssituationen ein Echo klar zu identifizieren.
Es ist bekannt, zur Erkennung eines Echos eine Korrelationsanalyse durchzuführen, bei der das gesendete Signal $x(k)$ in einem Zeitintervall $k = O... N$ aufgezeichnet und mit dem am Empfangsort ankommenden Signal $y(k)$ verglichen wird, vgl. DE-A-42 29 910. Das Korrelationsmaß ρ gibt dann die Wahrscheinlichkeit an, ob ein Echo, ρ = 1, oder ein Mischsignal, ρ = 0, vorliegt. Die Entscheidung, ob das Korrelationsmaß ρ als Echo oder als Mischsignal, hervorgerufen durch das Gegensprechen, zu deuten ist, wird durch einen Schwellenwert γ getroffen. Je größer der Schwellenwert γ gewählt wird, desto seltener werden vorhandene Echos erkannt. Somit werden häufig Fehlentscheidungen getroffen und die Adaption des Systems wird blockiert. Wird andererseits der Schwellenwert γ zu klein gewählt, besteht die Gefahr, daß das System im Gegensprechbetrieb adaptiert und instabil wird. Der Rechenaufwand für die Korrelationsanalyse mit N Multiplikationen, N Adaptionen und einer Division ist sehr hoch und die Sicherheit, ein Echo zu erkennen, ist dennoch unbefriedigend.
Mit der Erfindung wird nun die Aufgabe gelöst, ein Verfahren zur Verbesserung der Echounterdrückung in einem Telekommunikationssystem anzugeben, das eine genaue Unterscheidung zwischen Echos und Gegensprechen und somit eine sichere Erkennung von Echos ermöglicht, insbesondere von Leitungsechos, deren Laufzeit bis zu 640 ms betragen kann und die bis zu fünfmal innerhalb von 64 ms auftreten können.
Diese Aufgabe wird erfindungsgemäß durch das im ersten Patentanspruch beschriebene Verfahren gelöst. Das Wesen der Erfindung besteht darin, daß aus der Kurvenform des Sprachsignals Impulsfolgen als spezielle Merkmale der Sprache abgeleitet werden, die zwar von der Frequenz nicht aber von der Amplitude des Sprachsignals abhängig sind, so daß sich in linearen Übertragungssystemen bei einem realen Echo unabhängig von der Dämpfung des Echos gleiche Impulsfolgen, nur zeitversetzt, bei dem gesendeten Signal und bei einem empfangenen Echo ergeben. Die Übereinstimmung der Zeitintervallfolgen von gesendetem Signal und empfangenem Signal ist ein Kennzeichen dafür, daß das empfangene Signal ein Echo des gesendeten Signals ist. Der zeitliche Versatz der Impulsfolgen ist ein Maß für die Echolaufzeit i.
Die Erfindung wird nunmehr an einem Ausführungsbeispiel erläutert. In der dazugehörigen Zeichnung zeigen

Fig 1    eine Übersichtsdarstellung einer echobehafteten Übertragungsstrecke,

Fig 2    ein Diagramm der gesendeten Zeitfunktion x(t) und der empfangenen Zeitfunktion y(t) und

Fig 3    ein Diagramm einer gesendeten Zeitfunktion x(t) mit den dazugehörigen Impulsen zum Zeitpunkt der lokalen Extremwerte der gesendeten Zeitfunktion x(t).

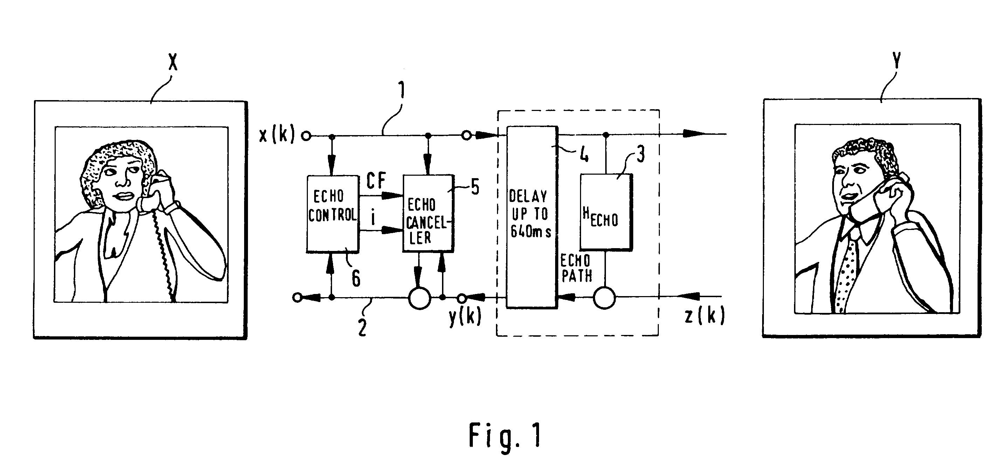

Zur Erläuterung des Sachverhalts zeigt die Figur 1 einen lokalen Teilnehmer X, der über einen Sendepfad 1 und einen Empfangspfad 2 mit einem Teilnehmer Y am fernen Ende der Übertragungsstrecke verbunden ist. Die Eigenschaften der Übertragungsstrecke werden durch einen Echogenerator 3 und durch ein Laufzeitglied 4 symbolisiert. Dem lokalen Teilnehmer X ist ein Echokompensator 5 zugeordnet, dessen Parameter von einer Steuerschaltung 6 über die Größe des Kopplungsfaktors CF und der Laufzeit i eines Echos eingestellt werden.

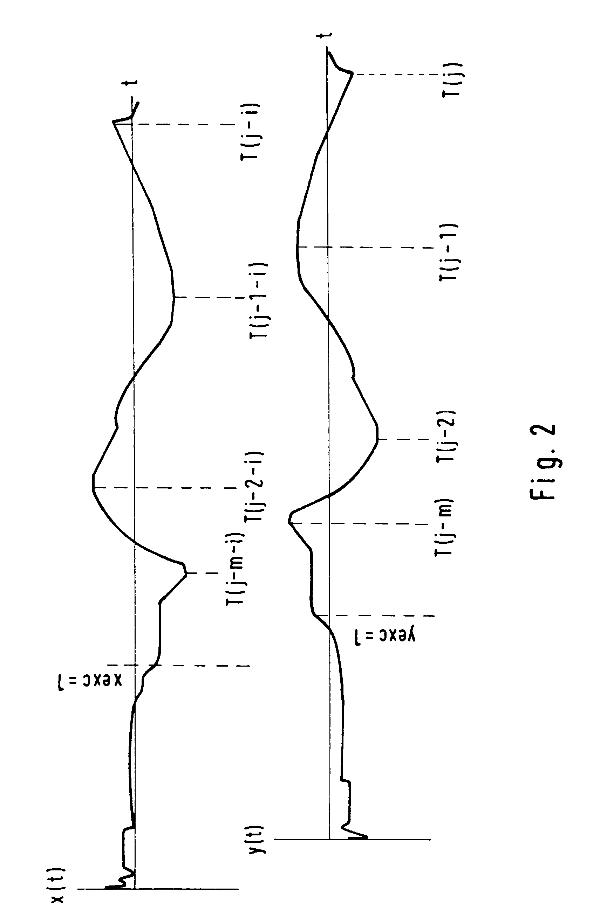

In Fig. 2 zeigt das obere Diagramm die Zeitfunktion x(t) eines Sprachsignals des lokalen Teilnehmers X und das untere Diagramm die Zeitfunktion y(t) eines vom lokalen Teilnehmer X empfangenen Signals. In der Darstellung der Fig. 2 zeigt die Zeitfunktion y(t) ein vom gesendeten Signal x(t) herrührendes Echo, das um 180° gegenüber dem gesendeten Signal gedreht und um eine Echolaufzeit i verschoben ist.

In beiden Zeitfunktionen sind Orte lokaler Extremwerte, beispielsweise T(j), T(j-i); T(j-1), T(j-1-i) markiert. In Fig. 1 sind die Abtastfunktionen x(k) der gesendeten Zeitfunktion x(t) und y(k) der empfangenen Zeitfunktion y(t) eingezeichnet, der entsprechende A/D-Wandler für die gesendete Zeitfunktion x(t) und der D/A-Wandler für die empfangene Abtastfunktion y(k) sind nicht dargestellt.

Zur exakten Bestimmung des Kopplungsfaktors CF und der Echolaufzeit i ist es unerläßlich , eine Messung dieser Größen nur dann durchzuführen, wenn gesichert ist, daß das gesendete Signal x(t) und das empfangene Signal y(t) von einer Quelle herrühren, insbesondere muß bei einer Gegensprechsituation eine Messung ausgeschlossen werden. Das Erkennen eines realen Echos muß zuverlässig, schnell und mit geringem Speicher - und Rechenaufwand erfolgen. Das Verfahren zur sicheren Erkennung eines Echos beruht darauf, daß bei der gesendeten Zeitfunktion x(t) und bei der empfangenen Zeitfunktion y(t) lokale Extremwerte bestimmt werden, wobei zur Bestimmung der lokalen Extremwerte die Abtastfunktionen x(k) und y(k) verwendet werden. Für die Abtastfunktion x(k) des gesendeten Signals wird ein lokaler Extremwert wie folgt definiert:

$$k_j = \text{sign}(x(k_{j+1}) - x(k_j)) \neq \text{sign}(x(k_j) - x(k_{j-1})) \tag{G2}$$

Die Zeitdifferenz zwischen zwei lokalen Extremwerten wird dann

$$T_j = k_j - k_{j-1} \tag{G3}$$

Für die Abtastfunktion y(k) des empfangenen Signals wird analog zu Gleichung G2 ein lokaler Extremwert $k_j$ definiert. Da die Zeitdifferenz zwischen zwei lokalen Extremwerten von der Kurvenform des Sprachsignals, nicht jedoch von der Amplitude des Sprachsignals abhängig ist, ergibt sich bei der Abtastfunktion x(k) des gesendeten Signals und bei der Abtastfunktion y(k) eines Echos jeweils die gleiche Zeitdifferenz Tj gemäß Gleichung G3. Wird nun jeder lokale Extremwert mit einem Impuls markiert, so ergeben sich bei dem gesendeten Signal und bei dem empfangenen Signal gleiche Impulsfolgen. In Fig. 2 sind die Zeitpunkte der lokalen Extremwerte eingezeichnet. Eine solche Impulsfolge ist ein Charakteristikum einer Sprachsequenz, aus der sich bei einem Echo ergibt:

$$T(j-m) - T(j-m-i) = T(j) - T(j-i) = \text{const.} = i \tag{G4}$$

Wird der erste lokale Extremwert des gesendeten Signals als Startzeitpunkt für die Echolaufzeitmessung verwendet, so ist dann der erste lokale Extremwert des empfangenen Signals der Stopzeitpunkt für die Echolaufzeitmessung. Um Fehlmessungen zu vermeiden, ist es zweckmäßig, mindestens das erste Zeitintervall nach der Anregung xexc = 1 durch den lokalen Teilnehmer X und entsprechend mindestens das erste Zeitintervall nach der Anregung yexc = 1 durch das empfangene Signal nicht zu verwenden. Dadurch wird erreicht, daß sich der Sprachpegel sicher von einem möglichen Umgebungsgeräusch abgehoben hat und die Zeitfunktion dann eine genauere Messung zuläßt. Aus der Impulsfolge der lokalen Extremwerte des gesendeten Signals x(t) und des empfangenen Signals y(t) wird ein Maß für die Ähnlichkeit der zu untersuchenden Signale abgeleitet. Dazu werden aus den Extremwerten T(j) in jeder Übertragungsrichtung Zeitintervalldifferenzen gemäß der Gleichungen G5 und G6 gebildet, aus denen gemäß Gleichung G7 ein Ähnlichkeitsmaß aus der Summe der Beträge der Zeitintervalldifferenzen berechnet wird.

$$dy(m) = T(j-m) - T(j-m-1) \qquad \text{(G5)}$$

$$dx(m) = T(j-i-m) - T(j-i-m-1) \qquad \text{(G6)}$$

mit m = 0,1,2 .... n

$$\rho(x, y) = \sum_{m=0}^{n} \left| dx(m) - dy(m) \right| \qquad \text{(G7)}$$

Bei übereinstimmenden Impulsfolgen sind die jeweiligen Zeitintervalldifferenzen dy(m) und dx(m) gleich und das Ähnlichkeitsmaß $\rho$ (x,y) = 0. Je nach Größe der Abtastfrequenz wird dieses Ähnlichkeitsmaß $\rho$(x,y) auch bei übereinstimmenden Impulsfolgen von null abweichen. Mit einer Entscheidungsschwelle $\gamma$ wird festgelegt, ob das empfangene Abtastsignal y(k) ein Echo ist oder gegebenenfalls von einem Gegensprechen herrührt. Entsprechend wird eine Zustandsvariable gesetzt, nämlich

$$\text{dtalk} = \begin{cases} 1 & \text{if} \quad \rho(x,y) > \gamma \\ 0 & \text{else} \quad \text{(Echo liegt vor)} \end{cases} \qquad \text{(G8)}$$

Falls das Ähnlichkeitsmaß $\rho$(x,y) größer als die Entscheidungsschwelle $\gamma$ ist, fehlt die Übereinstimmung der Impulsfolgen, und es liegt die Gegensprechsituation dtalk (doubletalk) vor. Die Parameter Kopplungsfaktor CF und Echolaufzeit i können dann nicht berechnet werden. Ist das Ähnlichkeitsmaß $\rho$(x,y) kleiner als die Entscheidungsschwelle $\gamma$, liegt ein Echo vor und Kopplungsfaktor CF und Echolaufzeit i können berechnet werden.
Zur Bestimmung des Ähnlichkeitsmaßes $\rho$(x,y) sind beispielsweise nur 5 Zeitintervalle für die Zeitintervalldifferenzen dy(m), dx(m) erforderlich, um eine genaue Auswertung zu ermöglichen. Somit ergibt sich eine erhebliche Verringerung des Speicheraufwandes und des Rechenaufwandes im Vergleich zu der aus dem Stand der Technik, vgl. DE-A-42 29 910, bekannten Korrelationsanalyse, um ein Echo zu identifizieren.
Das Verfahren ist auch dazu geeignet, um ein Echo mit einem durch ein FIR-Filter nachgebildeten Echo zu vergleichen. Das Ähnlichkeitsmaß wird dann zur Steuerung der Schrittweite des Echokompensators verwendet.

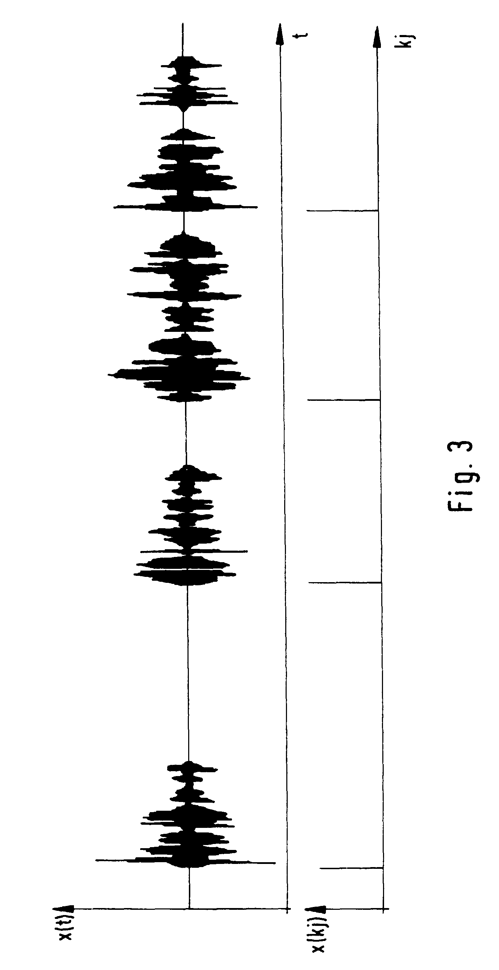

Fig. 3 zeigt eine Möglichkeit zur Erzeugung einer charakteristischen Impulsfolge. Im oberen Diagramm ist eine Sprachsequenz als Zeitfunktion x(t) dargestellt. Nach einer Sprachpause wird jeweils nur bei dem ersten der Sprachpause folgendem lokalen Extremwert ein Impuls gesetzt, so daß die in dem unteren Diagramm dargestellte Impulsfolge $x(k_j)$ entsteht.
Entsprechend wird auch das empfangene Signal y(t) durch eine Impulsfolge $y(k_j)$ charakterisiert. Diese Variante ermöglicht eine einfache Auswertung der Impulsfolge von gesendetem und empfangenem Signal.
Um die Impulsfolgen unabhängig von möglichen Rauschsignalen zu machen, ist es zweckmäßig, die Sprachsequenzen in den beiden Übertragungsrichtungen jeweils mit einem Tiefpaß zu filtern, so daß dann lokale Extremwerte nur von der Sprache, nicht aber von möglichen Störungen herrühren.
Das erfindungsgemäße Verfahren ermöglicht bei einer bidirektionalen Sprachübertragung die Zeitabschnitte der Sprachübertragung zu ermitteln, die für die Bestimmung von Kopplungsfaktor CF und Echolaufzeit i geeignet sind, um dann davon abhängig die Parameter eines Echokompensators oder eines Kompanders einstellen zu können.

**Patentansprüche**

1. Verfahren zur Verbesserung der Echounterdrückung in einem Telekommunikationssystem, bei dem ein Informationsaustausch zwischen einem lokalen Teilnehmer (X) und einem Teilnehmer (Y) am fernen Ende einer Übertragungsstrecke erfolgt und mindestens einem Teilnehmer (X,Y) eine Echounterdrückungseinrichtung (5) zugeordnet ist, deren Parameter über eine Steuerschaltung (6) als Funktion eines Echokopplungsfaktors (CF) und einer Echolaufzeit (i) eingestellt werden, dadurch gekennzeichnet, daß während des Informationsaustauschs zwischen den Teilnehmern (X,Y) die Zeitabschnitte für die Berechnung des Echokopplungsfaktors (CF) und der Echolaufzeit (i) derart ermittelt werden, daß aus dem von einem Teilnehmer gesendeten Signal (x(t)) und aus dem bei einem Teilnehmer empfangenen Signal (y(t)) jeweils die Lage der Extremwerte der Zeitfunktionen des gesendeten und des empfangenen Signals (x(t); y(t)) ermittelt und mit einem Impuls markiert werden, so daß Impulsfolgen (x(kj); y(kj)) entstehen, die gespeichert und miteinander verglichen werden und daß bei Übereinstimmung der Impulsfolgen (x(kj); y(kj)) das empfangene Signal (y(t)) von dem gesendeten Signal (x(t)) herrührt und somit als Echo erkannt wird und daß dann der Echokopplungsfaktor (CF) und die Echolaufzeit (i) berechnet werden.

2. Verfahren nach Anspruch 1, dadurch gekennzeichnet, daß aus der zeitlichen Verschiebung der Impulsfolge (y(kj)) aus dem empfangenen Signal (y(t)) gegenüber der Impulsfolge (x(kj)) aus dem gesendeten Signal (x(t)) die Echolaufzeit (i) bestimmt wird.

3. Verfahren nach Anspruch 1, dadurch gekennzeichnet, daß der Vergleich der Impulsfolgen aus gesendetem Signal (x(t)) und empfangenem Signal (y(t)) derart durchgeführt wird, daß in einem definierten Zeitintervall in jeder Impulsfolge (x(kj), y(kj)) jeweils die Zeitintervalldifferenz (dx(m), dy(m)) zweier aufeinanderfolgender Extremwerte gebildet wird und daß diese Zeitintervalldifferenzen (dx(m), dy(m)) voneinander subtrahiert werden, wobei die Übereinstimmung der Impulsfolgen umso besser ist, je kleiner die Differenz der Zeitintervalldifferenzen (dx(m), dy(m)) ist.

4. Verfahren nach Anspruch 3, dadurch gekennzeichnet, daß der Betrag der Differenz (I dx(m)-dy(m) I) der Zeitintervalldifferenzen (dx(m), dy(m)) ein Ähnlichkeitsmaß (p(x,y)) für die Impulsfolgen (x(kj), y(kj)) ist, das mit einem definierten Schwellwert (γ) verglichen wird.

Fig. 1

EP 0 998 110 A2

Fig. 2

Fig. 3

EP 0 998 110 A2